(19) **Europäisches Patentamt**

**European Patent Office**

**Office européen des brevets**

(11) **EP 1 160 767 B1**

(12) **EUROPEAN PATENT SPECIFICATION**

(45) Date of publication and mention
of the grant of the patent:
**06.07.2005 Bulletin 2005/27**

(51) Int Cl.⁷: $G10L\ 15/18$, $G10L\ 15/14$, $G10L\ 15/16$

(21) Application number: **00128099.9**

(22) Date of filing: **21.12.2000**

(54) **Speech recognition with contextual hypothesis probabilities**

Spracherkennung mit Wahrscheinlichkeiten der Kontexthypothesen

Reconnaissance de la parole à l'aide de probabilités d'hypothèses contextuelles

| | |
|---|---|
| (84) Designated Contracting States:<br>**AT BE CH CY DE DK ES FI FR GB GR IE IT LI LU MC NL PT SE TR** | (56) References cited:<br>**EP-A- 0 566 884**  **WO-A-00/13170**<br>**WO-A-00/16311**  **WO-A-01/18793**<br>**US-A- 5 752 230**  **US-A- 5 802 251**<br>**US-A- 5 995 928** |
| (30) Priority: **27.05.2000 EP 00111440** | |
| (43) Date of publication of application:<br>**05.12.2001 Bulletin 2001/49** | • **R. VAN KOMMER AND F. CHANTEMARGUE: "A Speech Recognition Interface to Khepera Robots" THE FIRST INTERNATIONAL KHEPERA WORKSHOP, 10 - 11 December 1999, XP002180052 Faderborn, Germany** |
| (73) Proprietor: **Swisscom Fixnet AG**<br>**3050 Bern (CH)** | • **KASPAR B ET AL: "SPRACHERKENNUNG FUER GROSSES VOKABULAR DURCH** |
| (72) Inventor: **Van Kommer, Robert**<br>**1752 Villars-sur Glâne (CH)** | **BUCHSTABIERREN" ITG FACHBERICHTE, VDE VERLAG, BERLIN, DE, no. 94, 28 April 1986 (1986-04-28), pages 31-36, XP000199294 ISSN: 0932-6022** |
| (74) Representative: **P&TS**<br>**Patents & Technology Surveys SA**<br>**Terreaux 7**<br>**P.O.Box 2848**<br>**2001 Neuchâtel (CH)** | |

**Description**

Technical Field

The present invention concerns a speech recognition method and system. More specifically, the present invention concerns a method and system for recognizing utterances and sequences of utterances like spelled letters or voice commands.

State of the art

In telecommunication services (teleservices), usability is of unparalleled importance to expand the market space of information, transaction and messaging services. Moreover, one of the key advantages of voice access compared to web access is the fast response time for simple information queries (it is not applicable for graphics or complex timetables).

Voice response systems, often called voice servers, which can be called and controlled by users using voice commands, are already known. They are used for example in interactive voice response systems (IVR) for providing various teleservices to users. Audio information may be stored in the voice response system, accessed from any telephone terminal in the world, and retrieved with voice commands or requests recognized in the system. More recently, voice response systems have been found in voice-enabled motion controllers, e.g. in robots, that can be controlled with voice commands. It has already been suggested to transmit those voice commands over a telecommunication network, in order to control the robot from any voice terminal equipment in the network.

Voice response systems usually comprise a speech recognition module, often called speech recognizer or simply recognizer, for recognizing and executing commands uttered by the user. Some systems furthermore include a speaker identification or verification module for identifying or verifying the user's identity.

In many applications, a short recognition time is very important for improving the usability of the system. If the user has to utter a complex sequence, like when spelling a word, an immediate feedback after each utterance can dramatically improve the system's user-friendliness. Even more importantly, when the spoken utterances correspond to command words for voice-activated robots or voice-enabled motion controllers, the overall reaction time of the whole system critically depends on the time needed for recognizing each command being uttered.

In teleservices using speech recognition, the current approach is based on Hidden Markov Models (HMM). The Viterbi algorithm is used for the alignment procedure of the speech models and of the spoken utterance.

For recognizing a sequence of utterances like spelled letters, digits, alphanumeric strings, etc., known speech recognition systems give an estimate of the spoken sequence only at the end of the sequence, which is usually detected by silence recognition. The estimate is available in the final stage of the recognizer and based on the whole sequence. Therefore, an estimate for a sequence can only be given well after each utterance in the complete sequence has been spoken. In many situations, a faster interactivity is needed, for example when a decision or an action has to be made based on said estimate.

US-A-5,995,928 (Speechworks) describes a spelling system where the name corresponding to a spelled sequence is presented to the speaker; this may occur before the speaker has finished uttering the full sequence.

In some teleservices, decisions have to be made based not only on complete sequences, but as well on isolated utterances or even on each single utterance in a sequence.

EP-A-0 566 884 discloses a speech recognition apparatus and method estimates the next word context for each current candidate word in a speech hypothesis. An initial model of each speech hypothesis comprises a model of a partial hypothesis of zero or more words followed by a model of a candidate word. An initial hypothesis score for each speech hypothesis comprises an estimate of the closeness of a match between the initial model of the speech hypothesis and a sequence of coded representations of the utterance.

WO 00/13170 discloses a network system including a plurality of tiers of interconnected computing elements. The plurality of tiers includes an input tier whereto a sequence of input speech vectors is applied at a first rate. Two of the plurality of tiers are interconnected through a decimator configured to reduce the first rate of the sequence of input vectors. Alternatively, two of the plurality of tiers are interconnected through an interpolator configured to increase the first rate of the sequence of input vectors.

The article "A Speech Recognition Interface to Khepera Robots", The first International Khepera Workshop, 10.12.1999, R. Van Kommer and F.Chantemargue describes the specific area of Collective Robotics, where it is said that the Man-Robot-Interface can be greatly enhanced by adding speech recognition.

US-A-5 802 251 discloses a method and system for reducing perplexity in a speech recognition system within a telephonic network based upon determined caller identity.

Summary of the invention

It is therefore an aim of the invention to propose a new method and a new system for improving the interactivity and the reaction speed in teleservices and in voice systems.

More particularly, another aim of the invention is to provide an improved method or system for recognizing utterances or sequences of utterances, in particular an improved method and system that allow a better and faster recognition and a better interactivity.

According to the invention, those goals are reached with a new speech recognition method for recognizing a sequence of utterances successively uttered by a speaker calling a voice response system according to the preamble of claim 1 characterized in that said utterance consists of a sub-word, spelled letter, a digit or an alpha-digit and making a decision depending on said estimate as soon as a predetermined level of confidence for said estimate has been reached, even if said sub-word, spelled letter, digit or alpha-digit has not yet been completely uttered.

Those goals may also be reached with a new speech recognition method for recognizing an utterance spoken by a speaker calling a voice response system, comprising:

(1) start recognizing a sub-word, spelled letter, digit or alpha-digit in said system as soon as at least a part of said utterance has been received,
(2) making a decision based on an estimate for said sub-word, spelled letter, digit or alpha-digit as soon as a predetermined level of confidence for said estimate has been reached, even if said sub-word, spelled letter, digit or alpha-digit has not yet been completely uttered.

The inventions refers as well to a speech recognition system in a telecommunication network according to claim 26 and to computer program product directly loadable into the internal memory of a digital computer according to claim 30.

The invention allows a trade-off between a short response time and the speech recognition accuracy.

In the following description and in the claims, the term "utterance" designates a single voice element, for example a single word, a single command word or a single spelled letter. A sequence of utterances indicates a series of utterances, for example a sentence, a plurality of command words or a spelled word.

Short description of the drawings

The invention will be better understood with the following description of an embodiment and with the annexed drawings in which:

Fig. 1 shows a schematized representation of a possible embodiment of an interactive voice response system according to the invention.
Figure 2 shows a flowchart illustrating the recognition process of an isolated utterance.
Figure 3 shows a flowchart illustrating the recognition process of a sequence of utterances.

Description of an embodiment of the invention

Two embodiments of the invention will be described. The first embodiment concerns the recognition of isolated utterances, for example individual letters or command words, wherein the second embodiment concerns the recognition of sequences of utterances, for example spelled words or sequences of spoken commands.

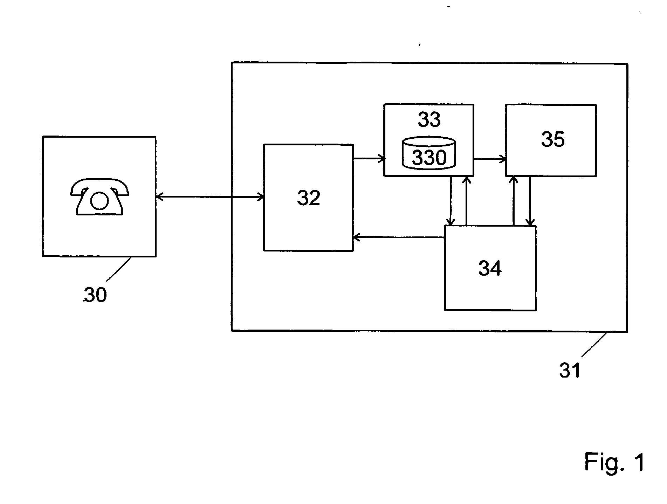

Figure 1 illustrates an interactive voice response system 31 (IVR) according to the invention. The system comprises a spoken utterance recognition module 33 which has been trained to recognize predefined utterances, for example words. The module 33 may include neural networks 330 or HMMs (Hidden Markov Models) and may use speaker-independent or, if the caller can be identified, speaker-dependant voice recognition algorithms. For each utterance received from the user 30, the module 33 delivers an estimate and a confidence level for this estimate.

The IVR 31 further includes a module 35 for testing if the beginning of the sequence of estimates delivered by the module 33 matches a known sequence, for example a word in a dictionary or an existing phone number. The module 35 implicitly or explicitly contains a list of possible sequences, wherein said list may include different homophones and different orthographies for at least some sequences, including incorrect orthographies. A probability may be associated with each sequence in the list, wherein the probability may depend on the user, on previous selections made by the user or by all users, on the user location, and/or on the context. The module 35 outputs a matching signal when a match as been found. The matching signal may include a confidence level, based for example on the probability that the matching sequence has been uttered by the user 30.

A dialogue manager module 34, which preferably includes a voice synthesizer, receives the sequence of estimates and the sequence of confidence levels from the modules 33 and 35 and makes decisions based on those sequences. The decision may imply for example giving an appropriate answer or feedback to the received utterance, or preparing instructions for a voice-enabled motion controller (not shown), in order to command a robot or a device with the uttered command words.

The IVR 31 preferably includes an echo canceller 32 in order to avoid recognition of answers or feedbacks from the dialogue manager 34 by the recognition module 33. The echo canceller is especially needed if the dialogue manager is allowed to barge in on the utterances from user 30.

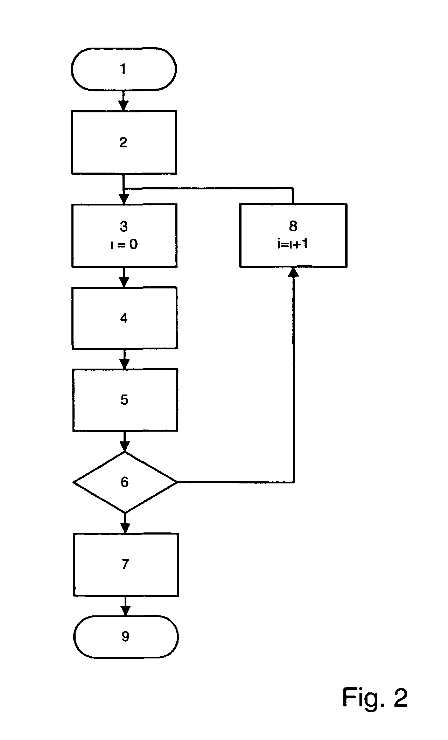

Figure 2 is a flowchart illustrating the recognition process of a single utterance according to a preferred embodiment. Reference 1 shows the start of the inventive process. During step 2, the requested interactivity/speech recognition accuracy ratio is set within the IVR system 31. This step may occur during programming of the modules 32 to 35 or at a later stage during personalization of those modules by the IVR operator or during execution of the program. This ratio defines the requested confidence level for each utterance; different confidence levels may be set for different utterances. A higher confidence level will usually result in a slower recognition and thus in a poorer interactivity.

The recognition of the received utterance in the module 33 starts during step 3 with the first frame i = 0 received during step 4. One frame may comprise for example 160 successive 8-bits sampling words, corresponding for example to 20 ms of speech. The recognition module 33 tries to recognize the whole utterance from this frame, from the previous frame and possibly from previous received utterances and/or from the context, and delivers during step 5 an estimate for the whole utterance with a confidence level for this estimate. This confidence level is compared during step 6 with a predefined level in the dialogue manager 34. If the confidence level is lower than the requested level, the system proceeds with the recognition of the next frame i = i+1 (step 8). If, on the other side, the predetermined level of confidence has been reached, the dialogue manager can immediately make a decision based on this estimate during step 7, without waiting for the whole utterance to be spoken and received. The process ends with step 9.

The decision made during step 7 may be for example to take any action, for example echoing said utterance or commanding a device, possibly even before the complete utterance has been spoken.

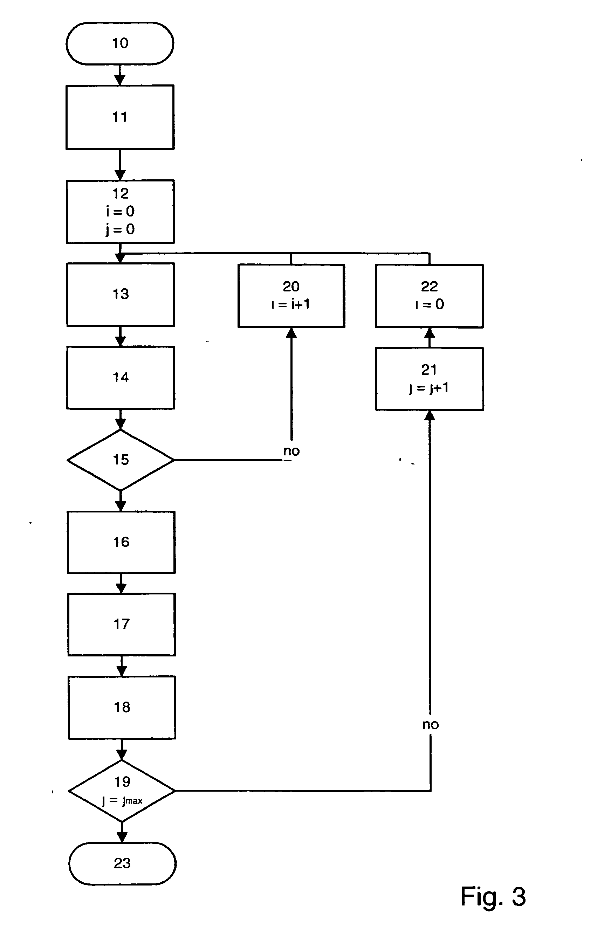

Figure 3 is a flowchart illustrating the recognition process of a sequence of utterances according to a further embodiment of the invention. The sequence of utterances may include for example spelled letters, sequences of digits or alpha-digits, credit card numbers, phone numbers, addresses, sequences of command words, etc.

Reference 10 shows the start of this process. During step 11, the interactivity/speech recognition ratio is set within the IVR system 31. As in the first embodiment, different confidence levels may be set for each utterance. The interactivity/speech recognition accuracy ratio determines the speed with which the system makes a decision in response to a given utterance in the received sequence. The recognition of the received utterance in the module 33 starts during step 12 with the first frame i = 0 of the first utterance j = 0 received during step 13. The recognition module 33 tries to recognize the whole utterance j from this frame, and possibly from previous received utterances and/or from the context, and delivers during step 14 an estimate for the whole utterance j with a confidence level for this estimate. This confidence level is compared during step 15 with a predefined level in the dialogue manager 34. If the confidence level is lower than the requested level, the system proceeds with the recognition of the next frame i = i+1 in the same utterance (step 20). If on the other side the requested level of confidence has been reached, the dialogue manager can immediately make a decision based on this estimate during step 16, without waiting for the whole utterance j to be spoken and received. The decision made during step 16 may be for example to barge into the user 30 by echoing said utterance or to send instructions to a voice-enabled motion controller in a robot for example.

The estimate for the utterance j is stored during step 17 in order to be used and to assist in the recognition of subsequent utterances. If the sequence received belongs to a known list of possible sequences, the module 35 computes the a priori probability of the next single utterance in that specific remaining list of sequences, given the beginning of the sequence. This on-the-fly a priori probability is used to improve the recognition of any further spoken utterance in the current sequence. If the beginning of the sequence is not in a predetermined list, the system may stop immediately the current dialogue exchange.

The rest of the utterance j, if any, is received during step 18. During step 19, the system checks if the whole sequence has been received. The end of the sequence may be detected if the sequence length is known in advance, for example if it corresponds to a phone number, or when a delimitator, for example a silence period, is received. The system may as well decide to stop the process if the next utterances in the sequence can be predicted with a sufficient level of confidence.

If the whole sequence has not yet been received, the process goes on with the first frame of the next received utterance (steps 21 and 22), until the whole sequence has been received or recognized with a sufficient confidence.

The system 31 has the ability to take an action, for example echoing the detected utterance, depending on the decision made during step 16. As in the prior art, other decisions can be made or actions taken when the whole sequence has been recognized with the required confidence level.

The speech recognition module 33 can be implemented by using conventional HMM decoding (the Viterbi) including partial utterances models to recognize the beginning of utterances like spelled letters or command words. However, the processing time for launching a new Viterbi algorithm at a short and regular time interval is only acceptable with powerful servers.

In a variant embodiment, the speech recognition module 33 is implemented using a faster neural network approach as described in WO-A1-013170. The idea is that for a highly interactive application, one can relax the string constraints to favor the local information (10-400 ms range). With a well-chosen window size one can, like in the case of partial HMMs, recognize a spoken utterance even before the speaker has finished uttering it. Preferably, a spoken utterance is detected within a temporal window of 10-400ms and this by saving the costly post-processing of the classical Viterbi DP alignment of the first HMM method. The neural network 330 of the speech recognizer 33 uses a set of discriminative functions:

$$g(X,\vartheta,q,rate),$$

where X represents the input window of speech frames, $\vartheta$ represents the set of parameters of the functions (i.e. the weights of the neural network 330), q are the delay operators and finally, the term *rate* refers to the multirate operators: the down and up sampler. The neural network 330 outputs estimate the a posteriori probabilities that a given input belongs to a certain spoken utterance class.

The neural network architecture preferably comprises a plurality of interconnected tiers, each tier consisting of at least one computational element, said tiers comprising an input tier to which a sequence of input signals can be applied at at least a first sampling rate. At least one computational element comprises a decimator for delivering a decimated signal with a lower sampling rate, so that the sampling rate of signals delivered by computational elements of different tiers is different. Each computational element in each tier is connected to computational elements of the preceding and of the succeeding tier. This architecture allows an efficient discrimination at the various output tiers (phonemes, sub-word or word level); and therefore, it allows the selection of the desired trade-off interactivity behavior/recognition accuracy depending on the chosen output tier of the network.

In the case of the recognition of isolated utterances, the utterance detection is activated as soon as possible when the discrimination is feasible at the phoneme, sub-word or at the word output tier. For instance, in the case where all utterances in the vocabulary start with a different phoneme, the recognizer 33 is able to detect the spoken utterance as soon as that first phoneme is uttered. In the case where two utterances, e.g. two command words or two letters, have the same first phoneme, the recognizer is able to detect the utterance at the next output tier, the sub-word tier. A typical example is to pilot by voice a voice-enabled motion controller, e.g. in a robot, with the two command words "left" and "right". The recognition time is highly improved when reacting on the first phoneme of each command.

Within such a system, there exists a trade-off regarding the confidence level of the recognition accuracy and the interactivity (speed of reaction) of the teleservice. The confidence level will increase with an increasing quantity of speech used in each utterance recognition (when all phonemes of the utterance are used, the confidence level is the highest), but the response time will increase. Therefore, for each particular utterance in the vocabulary, the system engineer has the ability to set the number of phonemes or HMM states used before the utterance detection is completed. Additionally, another tuning of the trade-off interactivity/accuracy is defined by the size of the speech window at the input of the recognizer. In two previous cases, a fixed delay depending on the utterance that is uttered has been defined. Another approach is to set the desired confidence level of the recognizer and, as soon as that level is met, the recognizer detects the spoken item. In this case, the response time is dependent also on the speaker and on the environment conditions.

In a variant embodiment, a series of successive estimates for each utterance is determined while the utterance is being spoken; each estimate is based on the hypotheses determined from the preceding utterances and on the available frames from the current utterance. It is considered that a sufficient level of confidence has been reached as soon as a given number of successive estimates in the series match.

In the case of a sequence of utterances, like spelling or the recognition of digit sequences or command word sequences, each utterance is detected as soon as it is spoken and, in some cases, even before the speaker has finished uttering the end of the utterance. Each single utterance of the sequence goes through a simple validation/acknowledgement procedure: as soon as the single utterance is recognized with the prescribed confidence level, the system takes a specific action like, e.g., "echoing" the recognized utterance to the speaker or commanding a voice-enabled motion controller, e.g. in a robot, to do a particular task or move. This may occur before the speaker has finished uttering the end of the utterance. This overlapping makes the recognition task faster and user-friendlier.

The echo-canceller module 32 allows the speaker 30 to barge in with the next input item while the IVR system 31 is still echoing the previous one. This module sends a cleaned window of speech to the recognition module 33.

A dialogue manager 34 decides upon the next dialogue turn to be activated. The a priori confidence level for each utterance or for each sequence of utterances is defined and stored within this module 34. Moreover, for each specific utterance the trade-off between the response time and the recognition accuracy can be set. These parameters are determined by the acoustic confusion of the vocabulary and the desirable interactive behavior suited for a particular application.

In the case of homophones, where words of different meanings are pronounced the same, the recognition will depend on the user, on previous selections made by the user or by all users, on the user location, on the choice of application or service requested and/or on the context.

In the case of sequence processing, the dialogue manager 34 assigns the matching list of possible sequences or the N-best list, if it is available from a previous dialogue turn, while the speaker is uttering the sequence of utterances. The dialogue manager updates the a priori probability of the next utterance (hypothesis). The recognizer 33 uses this hypothesis to improve the recognition rate of the next utterance and therefore, it improves the recognition rate as the speaker 30 reaches the last items in the sequence.

A speech utterance detector performs the speech item detection, either by using partial HMM of utterances or with the defined multi-tier neural network architecture. In the case of the neural network architecture, all tiers (phoneme, sub-word and word) are used to detect speech input. The input signal is composed of a window of speech frames. The vocabulary to be detected is assigned by the dialogue manager. The a priori probability of each utterance is also assigned by the dialogue manager. The output (recognized word and confidence level) of the bloc is sent either to the list matcher for sequence processing or directly to the dialogue manager in the case of isolated word recognition.

A bloc with the task of matching the available beginning of the utterance currently spoken with the predefined list of possible utterances is optional. For sequences of utterances, given a certain input sequence with certain confidence values, the matching process generates the best match in the given list. The internal representation of the list is adapted to improve the processing speed. Known algorithms are dynamic programming, such as the Viterbi algorithm. The target list of sequences is stored as well as the a priori probability of occurrences in the list. With a new iteration, typically for each new utterance uttered by the speaker, the list is reduced to reflect the added information. The process helps to predict the next utterance of the remaining list by recomputing the priors within the given list. If the utterance could not be found within the given list with a certain confidence level, the process is interrupted before the speaker has finished uttering the full sequence.

Example of implementation

This example is about a partial dialogue typical in a voice-enabled e-commerce portal. The system is asking the speaker 30 to give his address and, more specifically, the town name.

| The speaker: | The voice enabled e-commerce portal: |
|---|---|
| ... | |
| | ... |
| | The voice portal: *Please, state the town name in your address.* |
| The speaker: *Bern.* | The system has built an N-best short list of town names, but the confidence to select the name from the list is not high enough. Therefore, the dialogue manager decides to launch the spelling dialogue with as parameter the short N-best list for the list-matching task. |
| | The voice portal: *Please, spell the town name?* |
| The speaker: *"B"* | Depending on the acoustic length of the words and response time of the system, the input/output speech signals may overlap. |
| | The voice portal: *"B" (echo of the input)* |
| The speaker: *"E"* | The speaker has provided a default confirmation by uttering the next letter "E" instead of saying the command word "correction". From the N-best list, the system can now, with the two letters "BE", determine with a sufficient level of confidence that the town is Bern. Therefore, the dialogue manager sets a high "a priori" probability that the next letter is "R". |
| | The voice portal: *" E " (echo of the input)* |
| The speaker: *" R "* | |
| | The voice portal: *"R" (echo of the input)* |
| The speaker: *"N"* | |

| | The voice portal: *What is the street name in Bern?* |
|---|---|
| ... | |

The a speech recognition method according to the invention may comprise a standard digital computer including an internal memory (not shown) in which a computer program product can be directly loaded for performing the steps of the invention when said program is run on said computer.

Reference numbers

**[0051]**

| | |
|---|---|
| 1 to 23 | Steps of a method |
| 30 | User, Speaker |
| 31 | Interactive Voice Response (IVR) System |
| 32 | Echo canceller |
| 33 | Utterance recognition module |
| 330 | Neutral network |
| 34 | Dialogue manager module |
| 35 | Module for testing |

**Claims**

1. A speech recognition method for recognizing a sequence (4) of utterances successively uttered by a speaker (30) calling a voice response system (31), comprising:

   (a) recognizing in said system (5) a first utterance in said sequence (4),
   (b) determining at least one hypothesis for the next utterance, based on all previously recognized utterances,
   (c) determining an estimate for said next utterance using a speech recognition method while said next utterance is being uttered, wherein said estimate is based on the beginning of said next utterance and on said hypothesis,
   **characterized in that**
   (d) said utterance consists of a sub-word, a spelled letter, a digit or an alpha-digit and making a decision (16) depending on said estimate as soon as a predetermined level of confidence for said estimate has been reached, even if said sub-word, spelled letter, digit or alpha-digit has not yet been completely uttered.

2. Speech recognition method as claimed in the claim 1, further comprising repeating said steps (b) to (d) for each utterance until all utterances in said sequence have been recognized.

3. Speech recognition method as claimed in one of the claims 1 or 2, wherein said sequences correspond to phone numbers and said utterances correspond to digits in said phone numbers.

4. Speech recognition method as claimed in one of the claims 1 or 2, wherein said sequences correspond to bank account numbers, credit card numbers, client numbers or product numbers and said utterances correspond to alpha-digits in said numbers.

5. Speech recognition method as claimed in one of the claims 3 to 5, wherein said decision implies to echo to said speaker a synthesized copy of said estimate.

6. Speech recognition method as claimed in one of the claims 3 to 6, wherein said sequence belongs to a list of possible sequences stored in said system, said hypothesis being determined using said list of possible sequences.

7. Speech recognition method as claimed in the preceding claim, wherein said list of possible sequences includes a plurality of orthographies for at least some of said sequences.

8. Speech recognition method as claimed in the preceding claim, wherein said plurality of orthographies include incorrect orthographies.

9. Speech recognition method as claimed in one of the claims 7 to 9, wherein different probabilities are associated with at least some of said sequences in said list of possible sequences.

10. Speech recognition method as claimed in one of the preceding claims, wherein said system comprises a voice-enabled motion controller, said utterances corresponding to commands for said motion controller, and said decision implies to prepare instructions for said motion controller.

11. Speech recognition method as claimed in one of the preceding claims, wherein an a priori probability is associated with each of said hypotheses for said next utterance.

12. Speech recognition method as claimed in one of the preceding claims, further comprising a step of barging-in on said speaker before said sequence has been completely spoken when said sequence has been recognized with a predetermined confidence level.

13. Speech recognition method as claimed in one of the preceding claims, further comprising a step of barging-in on said speaker if the previously recognized utterance does not form the beginning of at least one sequence in a list of possible sequences stored in said system.

14. Speech recognition method as claimed in one of the preceding claims, wherein a word is first entirely uttered and then spelled, said utterances corresponding to spelled letters of said word, said hypothesis for each spelled letter being at least partially based on the recognition of said entirely uttered word.

15. Speech recognition method as claimed in one of the preceding claims, wherein said step of recognizing said next utterance is implemented using hidden Markov models modeling the beginning of said utterances.

16. Speech recognition method as claimed in the preceding claim, wherein said step of recognizing said next utterance is implemented using a Viterbi algorithm for determining the most likely utterance being uttered, taking into account said hypothesis.

17. Speech recognition method as claimed in one of the claims 1 to 15, wherein said step of recognizing said next speech element is implemented using a neural network (330) system.

18. Speech recognition method as claimed in the preceding claim, wherein the weight given to at least some synapses in said neural network (330) depends on said hypothesis.

19. Speech recognition method as claimed in claim 18 or 19, wherein said neural network (330) uses speech samples of a duration comprised between 10 and 400 ms.

20. Speech recognition method as claimed in claim 18, wherein said neural network (330) system comprises a plurality of interconnected tiers, each tier consisting of at least one computational element, said tiers comprising an input tier to which a sequence of input signals can be applied at at least a first sampling rate,
    wherein at least one computational element comprises a decimator for delivering a decimated signal with a lower sampling rate.

21. Speech recognition method as claimed in one of the preceding claims, wherein a series of successive estimates for said next utterance is determined while said utterance is being uttered, said predetermined level of confidence being reached as soon as a given number of successive estimates in said series match.

22. Speech recognition method as claimed in one of the preceding claims, further comprising a step of changing said predetermined confidence level.

23. Speech recognition method as claimed in one of the preceding claims, further comprising a step of changing said predetermined confidence level by setting an interactivity/speech accuracy.

24. Speech recognition method as claimed in one of the preceding claims, further comprising a step of setting a trade-off between the response time for echoing each of said utterances and the desired recognition accuracy.

**25.** A speech recognition method for recognizing an utterance or each utterance in a sequence of utterances uttered by a speaker (30) calling a voice response system (31), comprising:

(1) starting to recognize a sub-word, a spelled letter, a digit or an alpha-digit in said system as soon as at least a part of said utterance has been received,
(2) making a decision based on an estimate for said sub-word, spelled letter, digit or alpha-digit as soon as a predetermined level of confidence for said estimate has been reached, even if said sub-word, spelled letter, digit or alpha-digit has not yet been completely uttered.

**26.** A speech recognition system for recognizing an utterance received from a speaker (30) calling though a telecommunication network, comprising:

a speech recognizer (33) for starting to recognize a sub-word, a spelled letter, a digit or an alpha-digit in said system as soon as at least a part of said utterance has been received,
a module (34) for making a decision depending on said estimate as soon as a predetermined level of confidence for said estimate has been reached, even if said sub-word, spelled letter, digit or alpha-digit has not yet been completely uttered.

**27.** Speech recognition system as claimed in claim 26, further comprising an echo canceller for allowing said system to barge in on said user when said level of confidence has been reached.

**28.** Speech recognition system as claimed in claim 26, further comprising a voice-enabled motion-controller for controlling a robot with said utterance.

**29.** Speech recognition system as claimed in claim 26, wherein said speech recognizer comprises a neural network (330) including a plurality of interconnected tiers, each tier consisting of at least one computational element, said tiers comprising an input tier to which a sequence of input signals can be applied at at least a first sampling rate, at least one computational element comprising a decimator for delivering a decimated signal with a lower sampling rate, so that the sampling rate of signals delivered by computational elements of different tiers is different, each computational element in each tier being connected to computational elements of the preceding and of the succeeding tier.

**30.** Computer program product directly loadable into the internal memory of a digital computer, comprising software code portions for performing the steps of one of the claims 1 to 25 when said software is run on a server connected to a telecommunication network.

**Patentansprüche**

**1.** Ein Spracherkennungsverfahren zur Erkennung einer Sequenz (4) von Äusserungen, die hintereinander von einem Sprecher (30), der ein Sprachantwortsystem (31) anruft, geäussert werden, wobei das Verfahren umfasst:

(a) Erkennen im besagten System (5) einer ersten Äusserung der besagten Sequenz (4),
(b) Bestimmen von mindestens einer Hypothese für die nächste Äusserung basierend auf allen vorher erkannten Äusserungen,
(c) Bestimmen einer Vormutung für die nächste Äusserung mit einem Spracherkennungsverfahren während die nächste Äusserung geäussert wird, wobei die Vermutung auf dem Beginn der besagten nächsten Äusserung und auf der besagten Hypothese basiert,
**dadurch gekennzeichnet, dass**
(d) besagte Äusserung aus einem Unterwort, einem buchstabierten Buchstaben, einer Ziffer oder einer alphanumerischen Zeichens besteht und eine Entscheidung abhängig von der besagten Vermutung sobald als möglich getroffen wird, wenn ein vorbestimmtes Vertraulichkeitsniveau für die bestimmten Vermutung erreicht wurde, auch wenn das besagte Unterwort, der einzelne Buchstabe, die Ziffer oder das alphanumerische Zeichen noch nicht ganz geäussert wurden.

**2.** Spracherkennungsverfahren wie in Anspruch 1 beansprucht, weiter umfassend Wiederholen der Schritte (b) bis (d) für jede Äusserung bis alle Äusserungen in der besagten Sequenz erkannt wurden.

**3.** Spracherkennungsverfahren wie in einem der Ansprüche 1 oder 2 beansprucht, wobei die besagte Sequenz einer Telephonnummer entspricht und die besagte Äusserung Ziffern in der besagten Telefonnummer sind.

**4.** Spracherkennungsverfahren wie in einem der Ansprüche 1 oder 2 beansprucht, wobei besagte Sequenz einer Kontonummer, einer Kreditkartennummer oder einer Produktnummer entspricht und die besagte Äusserung alphanumerischen Zeichen in den besagten Nummern sind.

**5.** Spracherkennungsverfahren wie in einem der Ansprüche 3 oder 4 beansprucht, wobei besagte Entscheidung eine Wiedergabe einer synthetisierten Kopie der Vermutung zum besagten Sprecher enthält.

**6.** Spracherkennungsverfahren wie in einem der Ansprüche 3 bis 5 beansprucht, wobei die besagte Sequenz zur einer Liste von möglichen Sequenzen gehört, die in besagtem System gespeichert sind, und die Hypothese durch Benutzung der besagten Liste von möglichen Sequenzen bestimmt wird.

**7.** Spracherkennungsverfahren wie im vorrangehenden Anspruch beansprucht, wobei die besagte Liste von möglichen Sequenzen eine Vielzahl Orthographien für mindestens einige der besagten Sequenzen enthält.

**8.** Spracherkennungsverfahren wie im vorrangehenden Anspruch beansprucht, wobei die besagte Vielzahl von Orthographien inkorrekte Orthographien enthält.

**9.** Spracherkennungsverfahren wie in einem der Ansprüche 7 oder 8 beansprucht, wobei verschiedene Wahrscheinlichkeiten mit mindestens einigen Sequenzen in der besagten Liste von möglichen Sequenzen assoziiert sind.

**10.** Spracherkennungsverfahren wie in einem der vorrangehenden Ansprüche beansprucht, wobei das besagte System einen sprachgesteuerten Aufnahmekontroller umfasst, besagte Äusserungen korrespondieren zu Befehlen des besagten Aufnahmekontrollers und die besagte Entscheidung impliziert, Instruktionen des besagten Aufnahmekontrollers vorzubereiten.

**11.** Spracherkennungsverfahren wie in einem der vorrangehenden Ansprüche beansprucht, wobei eine a priori-Wahrscheinlichkeit mit jeder der besagten Hypothese für die nächste Äusserung verbunden ist.

**12.** Spracherkennungsverfahren wie in einem der vorrangehenden Ansprüche beansprucht, weiter umfassend einen Schritt Unterbrechen des besagten Sprechers bevor die besagte Sequenz vollständig ausgesprochen wurde, wenn besagte Sequenz mit einem vorbestimmten Vertraulichkeitsniveau erkannt wurde.

**13.** Spracherkennungsverfahren wie in einem der vorrangehenden Ansprüche beansprucht, weiter umfassend Unterbrechen des besagten Sprechers, wenn die vorher erkannte Äusserung nicht den Anfang von mindestens einer Sequenz in einer Liste von möglichen Sequenzen, die in dem besagten System gespeichert sind, bildet.

**14.** Spracherkennungsverfahren wie in einem der vorrangehenden Ansprüche beansprucht, wobei ein Wort zuerst ganz ausgesprochen und danach buchstabiert wird, die besagten Äusserungen entsprechen buchstabierten Buchstaben des besagten Worts, die besagte Hypothese für jeden buchstabierten Buchstaben basiert wenigstens teilweise auf der Erkennung von dem besagten ganz ausgesprochenem Wort.

**15.** Spracherkennungsverfahren wie in einem der vorrangehenden Ansprüche beansprucht, wobei der besagte Schritt von Erkennen der nachsten besagten Äusserung durch den Gebrauch von versteckten Markovmodellen, die den Beginn der besagten Äusserungen modellieren, implementiert ist.

**16.** Sprecherkennungssystem wie in dem vorrangehenden Anspruch beansprucht, wobei der besagte Schritt von Erkennen der nächsten Ausserung durch die Benutzung eines Viterbi-Algorithmus zur Bestimmung der wahrscheinlichsten Äusserung, die geäussert wird, implementiert ist, wobei die besagte Hypothese in Betracht gezogen wird.

**17.** Spracherkennungsverfahren wie in einem der Ansprüche 1 bis 15 beansprucht, wobei der besagte Schritt von Erkennen des besagten nächsten Sprachelements durch die Benutzung eines neuronalen Netzwerksystems (330) implementiert ist.

**18.** Sprecherkennungssystem wie in dem vorrangehenden Anspruch beansprucht, wobei der Stellenwert von mindestens einigen Synapsen in dem besagten neuronalen Netzwerk (330) von der besagten Hypothese abhangig ist.

**19.** Spracherkennungsverfahren wie in einem der Ansprüche 17 oder 18 beansprucht, wobei das besagte neuronale Netzwerk (330) Sprachproben von einer Dauer zwischen 10 und 400ms gebraucht.

**20.** Spracherkennungsverfahren wie in Ansprüche 19 beansprucht, wobei das besagte neuronale Netzwerk (330) eine Vielzahl von mit einander verbundenen Schnittstellen umfasst, jede Schnittstelle besteht aus mindestens einem Rechenelement, die besagten Schnittstellen umfassen eine Eingangsschnittstelle, zu welcher eine Sequenz von Eingangssignalen in einer mindestens ersten Abtastrate angewendet werden können, wobei mindestens ein Rechenelement einen Dezimator zur Versorgung eines dezimierten Signals mit einer geringeren Abtastrate umfasst.

**21.** Sprecherkennungsverfahren wie in einem der vorrangehenden Ansprüche beansprucht, wobei eine Serie von nacheinanderfolgenden Vormutungen für die besagte nächste Äusserung bestimmt wird, während die Äusserung geäussert wird, und das besagte vorbestimmte Vertrauensniveau erreicht wird, sobald als eine bestimmte Anzahl von nacheinanderfolgenden Vermutungen in der besagten Serie übereinstimmen.

**22.** Sprecherkennungsverfahren wie in einem der vorrangehenden Ansprüche beansprucht, weiter umfassend einen Schritt Wechseln von dem vorbestimmten Vertraulichkeitsniveau.

**23.** Sprecherkennungsverfahren wie in einem der vorrangehenden Ansprüche beansprucht, weiter umfassend einen Schritt Wechseln von dem vorbestimmten Vertraulichkeitsniveaus durch Setzen einer Interaktivität/Sprach-Genauigkeit.

**24.** Sprecherkennungsverfahren wie in einem der vorrangehenden Ansprüche beansprucht, weiter umfassend einen Schritt von Setzen einer Abwägung zwischen der Antwortzeit zur Wiedergabe von jeder der besagten Äusserungen und der gewünschten Erkennungsgenauigkeit.

**25.** Ein Spracherkennungsverfahren zur Erkennung einer Äusserung oder jeder Äusserung in einer Sequenz von Äusserungen, die hintereinander von einem Sprecher (30), der ein Sprachantwortsystem (31) anruft, geäussert werden, wobei das Verfahren umfasst:

(1) Beginn einer Erkennung eines Unterworts, eines buchstabierten Buchstaben, einer Ziffer oder eines alphanumerischen Zeichens in besagtem System sobald als mindestens ein Teil von besagter Äusserung empfangen wurde,

(2) Entscheiden auf der Basis einer Vermutung für besagtes Unterwort, den buchstabierten Buchstaben, die Ziffer oder das alphanumerischen Zeichen sobald als ein vorbestimmtes Niveau von Vertraulichkeit für die bestimmten Vermutung erreicht wurde, auch wenn das besagte Unterwort, der einzelne Buchstabe, die Ziffer oder das alphanumerische Zeichen noch nicht ganz geäussert wurden.

**26.** Ein Spracherkennungssystem zur Erkennung einer Äusserung, die von einem Sprecher (30), der durch ein Telekommunikationsnetwerk anruft, wobei das System umfasst:

einen Spracherkenner (33), um die Erkennung eines Unterwortes, eines buchstabierten Buchstabens, einer Ziffer oder eines alphanumerischen Zeichens zu beginnen, sobald mindestens ein Teil der besagten Äusserung empfangen wurde,

ein Modul (34), um eine Entscheidung abhängig von einer Vermutung zu treffen, sobald ein vorbestimmtes Vertraulichkeitsniveau für die besagte Vermutung erreicht wurde, auch wenn das besagte Unterwort, der einzelne Buchstabe, die Ziffer oder das alphanumerische Zeichen noch nicht ganz geäussert wurden.

**27.** Spracherkennungssystem wie in Anspruch 26 beansprucht, weiter umfassend einen Echokompensator, um dem besagten System zu erlauben, den Benutzer zu unterbrechen, wenn besagtes Vertraulichkeitsniveau erreicht wurde.

**28.** Spracherkennungssystem wie in Anspruch 26 beansprucht, weiter umfassend einen sprachgesteuerten Aufnahmekontroller, um einen Roboter mit der besagten Äusserung zu steuern.

**29.** Spracherkennungssystem wie in Anspruch 26 beansprucht, wobei der besagte Spracherkenner ein neuronales Netzwerk (330) mit einer Vielzahl von miteinander verbundenen Schnittstellen umfasst, jede Schnittstelle besteht aus mindestens einem Rechenelement, die besagten Schnittstellen umfassen eine Eingangsschnittstelle, zu welcher eine Sequenz von Eingangssignalen in einer mindestens ersten Abtastrate angewendet werden können, wobei mindestens ein Rechenelement einen Dezimator zur Versorgung eines dezimierten Signals mit einer geringeren Abtastrate umfasst, so dass die Abtastrate von Signalen, die von den Rechenelementen geliefert werden, in verschiedenen Schnittstellen verschieden ist, und jedes Rechenelement in jeder Schnittstelle mit einem Rechenelement der vorhergehenden und der nachfolgenden Schnittstelle verbunden ist.

30. Computerprogrammprodukt, welches direkt in den inneren Speicher eines digitalen Computers ladbar ist, umfassend Teile eines Softwarecodes, um die Verfahrensschritte in einem der Ansprüche 1 bis 25 durchzuführen, wenn die besagte Software auf einem Server, der mit einem Telekommunikationsnetwerk verbunden ist, abgespielt wird.

**Revendications**

1. Un procédé de reconnaissance vocale pour reconnaître une séquence (4) de paroles prononcées successivement par un orateur (30) appelant un système de réponse vocale (31), comprenant:

   (a) reconnaître dans ledit système (5) une première parole dans ladite séquence (4),
   (b) déterminer au moins une hypothèse pour la prochaine parole, basée sur toutes les paroles reconnues précédemment,
   (c) déterminer une estimation pour ladite prochaine parole en utilisant un procédé de reconnaissance vocale tandis que ladite prochaine parole est en train d'être prononcée, ladite estimation étant basée sur le début de ladite prochaine parole et sur ladite hypothèse,
       **caractérisé en ce que**
   (d) ladite parole consiste en un sous-mot, une lettre épelée, un chiffre ou un caractère alphanumérique et prendre une décision (16) en fonction de ladite estimation aussitôt qu'un niveau de confiance prédéterminé pour ladite estimation a été atteint, même si ledit sous-mot, lettre épelée, chiffre ou caractère alphanumérique n'a pas encore été complètement prononcé.

2. Procédé de reconnaissance vocale comme revendiqué dans la revendication 1, comprenant en outre la répétition desdites étapes (b) à (d) pour chaque parole jusqu'à ce que toutes les paroles dans ladite séquence ont été reconnues.

3. Procédé de reconnaissance vocale comme revendiqué dans l'une des revendications 1 ou 2, lesdites séquences correspondant à des numéros de téléphone et lesdites paroles correspondant à des chiffres dans lesdits numéros de téléphone.

4. Procédé de reconnaissance vocale comme revendiqué dans l'une des revendications 1 ou 2, lesdites séquences correspondant à des numéros de comptes bancaires, des numéros de cartes de crédit, des numéros de client ou des numéros de produits et lesdites paroles correspondent à des caractères alphanumériques dans lesdits numéros.

5. Procédé de reconnaissance vocale comme revendiqué dans l'une des revendications 3 ou 4, ladite décision impliquant de renvoyer en écho audit orateur une copie synthétisée de ladite estimation.

6. Procédé de reconnaissance vocale comme revendiqué dans l'une des revendications 3 à 5, ladite séquence appartenant à une liste de séquences possibles mémorisée dans ledit système, ladite hypothèse étant déterminée en utilisant ladite liste de séquence possible.

7. Procédé de reconnaissance vocale comme revendiqué dans la revendication précédente, ladite liste de séquences possibles incluant une pluralité d'orthographes pour au moins certaines desdites séquences.

8. Procédé de reconnaissance vocale comme revendiqué dans la revendication précédente, ladite pluralité d'orthographes incluant des orthographes incorrectes.

9. Procédé de reconnaissance vocale comme revendiqué dans l'une des revendications 7 ou 8, différentes probabilités étant associées à au moins certaines desdites séquences dans ladite liste de séquences possibles.

10. Procédé de reconnaissance vocale comme revendiqué dans l'une des revendications précédentes, ledit système comprenant un contrôleur de mouvements à commandes vocales, lesdites paroles correspondant à des commandes pour ledit contrôleur de mouvements, et ladite décision impliquant de préparer des instructions pour ledit contrôleur de mouvements.

**11.** Procédé de reconnaissance vocale comme revendiqué dans l'une des revendications précédentes, une probabilité à priori étant associée avec chacune desdites hypothèses pour ladite prochaine parole.

**12.** Procédé de reconnaissance vocale comme revendiqué dans l'une des revendications précédentes, comprenant en outre une étape d'interruption dudit orateur avant que ladite séquence n'ait été complètement prononcée lorsque ladite séquence a été reconnue avec un niveau de confiance prédéterminé.

**13.** Procédé de reconnaissance vocale comme revendiqué dans l'une des revendications précédentes, comprenant en outre une étape d'interruption dudit orateur si les paroles reconnues précédemment ne forment pas le début d'au moins une séquence dans une liste de séquences possibles mémorisée dans ledit système.

**14.** Procédé de reconnaissance vocale comme revendiqué dans l'une des revendications précédentes, un mot étant d'abord entièrement prononcé et ensuite épelé, lesdites paroles correspondant à des lettres épelées dudit mot, ladite hypothèse pour chaque lettre épelée étant au moins partiellement basée sur la reconnaissance dudit mot entièrement prononcé.

**15.** Procédé de reconnaissance vocale comme revendiqué dans l'une des revendications précédentes, ladite étape de reconnaissance de ladite prochaine parole étant implémentée en utilisant des modèles cachés de Markov modélisant le début desdites paroles.

**16.** Procédé de reconnaissance vocale comme revendiqué dans la revendication précédente, ladite étape de reconnaissance de ladite prochaine parole étant implémentée en utilisant un algorithme de Viterbi pour déterminer la parole la plus probablement prononcée, en prenant en compte ladite hypothèse.

**17.** Procédé de reconnaissance vocale comme revendiqué dans l'une des revendications 1 à 15, ladite étape de reconnaissance dudit prochain élément vocal étant implémentée en utilisant un système de réseau neuronal (330).

**18.** Procédé de reconnaissance vocale comme revendiqué dans la revendication précédente, le poids donné à au moins certaines synapses dans ledit réseau neuronal (330) dépendant de ladite hypothèse.

**19.** Procédé de reconnaissance vocale comme revendiqué dans l'une des revendications 17 ou 18, ledit réseau neuronal (330) utilisant des échantillons vocaux d'une durée comprise entre 10 et 400 ms.

**20.** Procédé de reconnaissance vocale comme revendiqué dans la revendication 19, ledit système de réseau neuronal (330) comprenant une pluralité de couches interconnectées, chaque couche consistant en au moins un élément de calcul, lesdites couches comprenant une couche d'entrée à laquelle une séquence de signaux d'entrée peut être appliquée à au moins une première cadence d'échantillonnage,

au moins un élément de calcul comprenant un décimateur pour fournir un signal décimé avec une cadence d'échantillonnage plus faible.

**21.** Procédé de reconnaissance vocale comme revendiqué dans l'une des revendications précédentes, une série d'estimations successives pour ladite prochaine parole étant déterminée tandis que ladite parole est en train d'être prononcée, ledit niveau de confiance prédéterminé étant atteint aussitôt qu'un nombre donné d'estimations successives dans ladite série concordent.

**22.** Procédé de reconnaissance vocale comme revendiqué dans l'une des revendications précédentes, comprenant en outre une étape de changement dudit niveau de confiance prédéterminé.

**23.** Procédé de reconnaissance vocale comme revendiqué dans l'une des revendications précédentes, comprenant en outre une étape de changement dudit niveau de confiance prédéterminé en fixant une exactitude interactivité/ voix.

**24.** Procédé de reconnaissance vocale comme revendiqué dans l'une des revendications précédentes, comprenant en outre une étape de fixation d'un compromis entre le temps de réponse pour renvoyer en écho chacune desdites paroles et l'exactitude de reconnaissance désirée.

**25.** Un procédé de reconnaissance vocale pour reconnaître une parole ou chaque parole dans une séquence de paroles prononcées par un orateur (30) appelant un système de réponse vocale (31), comprenant:

(1) commencer à reconnaître un sous-mot, une lettre épelée, un chiffre ou un caractère alphanumérique dans ledit système aussitôt qu'au moins une partie de ladite parole a été reçue,

(2) prendre une décision basée sur une estimation pour ledit sous-mot, lettre épelée, chiffre ou caractère alphanumérique aussitôt qu'un niveau de confiance prédéterminé pour ladite estimation a été atteint, même si ledit sous-mot, lettre épelée, chiffre ou caractère alphanumérique n'a pas encore été complètement prononcé.

**26.** Un procédé de reconnaissance vocale pour reconnaître une parole reçu d'un orateur (30) appelant à travers un réseau de communication, comprenant:

un reconnaisseur vocal (33) pour commencer à reconnaître un sous-mot, une lettre épelée, un chiffre ou un caractère alphanumérique dans ledit système aussitôt qu'au moins une partie de ladite parole a été reçue, un module (34) pour prendre une décision en fonction d'une estimation aussitôt qu'un niveau de confiance prédéterminé pour ladite estimation a été atteint, même si ledit sous-mot, lettre épelée, chiffre ou caractère alphanumérique n'a pas encore été complètement prononcé.

**27.** Procédé de reconnaissance vocale comme revendiqué dans la revendication 26, comprenant en outre un correcteur d'écho pour permettre audit système d'interrompre ledit utilisateur lorsque ledit niveau de confiance a été atteint.

**28.** Procédé de reconnaissance vocale comme revendiqué dans la revendication 26, comprenant en outre un contrôleur de mouvements à commandes vocales pour contrôler un robot avec ladite parole.

**29.** Procédé de reconnaissance vocale comme revendiqué dans la revendication 26, ledit reconnaisseur vocal comprenant un réseau neuronal (330) incluant une pluralité de couches interconnectées, chaque couche consistant en au moins un élément de calcul, lesdites couches comprenant une couche d'entrée à laquelle une séquence de signaux d'entrée peut être appliquée à au moins une première cadence d'échantillonnage, au moins un élément de calcul comprenant un décimateur pour fournir un signal décimé avec une cadence d'échantillonnage plus faible, de sorte que la cadence d'échantillonnage de signaux fournis par des éléments de calcul de couches différentes est différent, chaque élément de calcul dans chaque couche étant connecté à des éléments de calcul des couches précédente et suivante.

**30.** Programme informatique directement chargeable dans la mémoire interne d'un ordinateur numérique, comprenant des portions de code logiciel pour effectuer les étapes de l'une des étapes 1 à 25 lorsque ledit logiciel est exécuté sur un serveur connecté à un réseau de télécommunication.

Fig. 1

Fig. 2

Fig. 3